# EUROPEAN PATENT APPLICATION

(11) **EP 4 324 804 A1**
(43) Date of publication of application: **21.02.2024**
(21) Application number: 22190789.2
(22) Date of filing: 17.08.2022
(51) Int. Cl.: C04B 20/02

(54) **A GLASSY SOLID, METHODS OF ITS PRODUCTION AND USES THEREOF**

(71) Applicant: Carbon Upcycling Technologies Inc., Calgary, AB T3S 0A2 (CA)
(72) Inventor: SINHA, Apoorva, Calgary, T3S 0A2 (CA)
(74) Representative: Nederlandsch Octrooibureau

(57) **Abstract**

The present invention relates to glassy solids which are obtainable by carbonation of a solid glassy precursor, said glassy precursor having a SiO₂ content of at least 65 wt.%. The invention further relates to a mechanochemically carbonated glassy solid and methods of its production. The invention further relates to uses of the (mechanochemically carbonated) glassy solid, for example as a filler. The invention further relates to compositions comprising the (mechanochemically carbonated) glassy solid and a further material selected from the group consisting of asphalt, cement, geopolymer, polymers and combinations thereof. The invention further relates to a method of preparing concrete.

## Description

### Field of the invention

The present invention relates to glassy solids which are obtainable by carbonation of a solid glassy precursor. The invention further relates to a mechanochemically carbonated glassy solid and methods of its production. The invention further relates to uses of the (mechanochemically carbonated) glassy solid, for example as a filler. The invention further relates to compositions comprising the (mechanochemically carbonated) glassy solid and a further material selected from the group consisting of asphalt, cement, geopolymers, polymers and combinations thereof. The invention further relates to a method for preparing concrete.

### Background art

Concrete is a composite material, comprising a matrix of aggregate (typically a rocky material) and a binder (typically Portland cement or asphalt), which holds the matrix together. Concrete is one of the most frequently used building materials and is said to be the second most widely used material on earth, after water.

In order to reduce the cost of concrete and the CO₂ emissions generated by global cement production, much research effort has been dedicated to identifying cheap material which can be used as a filler or alternative binder to replace the binder component without (detrimentally) affecting the properties of concrete. Such secondary cementitious materials are an area of broad industry interest.

An example of a widely employed cement filler is limestone. A comprehensive overview of fillers in cementitious materials can be found in John, Vanderley M., et al. "Fillers in cementitious materials-Experience, recent advances and future potential." Cement and Concrete Research 114 (2018): 65-78.

The production of Portland cement contributes to about 8% of world carbon dioxide emissions. According to Vanderley et al. the traditional mitigation strategies for CO₂ emissions in the cement industry are not sufficient to ensure the necessary mitigation in a scenario of increasing cement demand. Currently, cement production is increasing due to a combination of increasing urbanization and replacement of old infrastructure. Therefore, the adoption of expensive and environmentally risky carbon capture and storage (CCS) has been considered an unavoidable solution by cement industry leaders.

Hence, there remains a need to develop affordable filler technology which can combine both the CO₂ emission reduction achieved by reduced cement production and the CO₂ emission reduction achieved by carbon capture technology and which does not detrimentally affect the properties of concrete.

KR20110017279 discloses the direct carbonation of a glass with the specific goal of CO₂ sequestration. For this purpose, a specific borosilicate glass with a relatively low silicon dioxide content and a high alkaline earth metal oxide content is prepared (having 15-55 mol% SiO₂, 10-40 mol% B₂O₃ and 10-40mol% CaO, SrO, BaO or MgO), which is then submitted to an aqueous carbonation process. Since KR20110017279 relies on a new, specific type of glass being produced via melting at 1000-1400°C for the purpose of CO₂ capture, it is very energy inefficient.

It is an object of the present invention to provide improved fillers for cement, geopolymer or asphalt binder.

It is a further object of the present invention to provide improved fillers for cement, geopolymer or asphalt binder which are cheap to produce.

It is a further object of the present invention to provide improved fillers for cement, geopolymer or asphalt binder which are produced using CO₂ capture technology.

It is a further object of the present invention to provide improved fillers for cement, geopolymer or asphalt binder which improve the properties of the resulting concrete, such as the compressive strength, the strength activity index and/or the water demand.

### Summary of the invention

The present inventors believe that they are the first to successfully carbonate a solid glassy precursor having a SiO₂ content of at least 65 wt.% (by total weight of the glassy precursor). Hence, in a first aspect the present invention provides a glassy solid which is obtainable by carbonation of a solid glassy precursor, said glassy precursor having a SiO₂ content of at least 65 wt.% (by total weight of the glassy precursor), preferably at least 70 wt.%.

In another aspect, the invention provides a method for producing a mechanochemically carbonated glassy solid, said method comprising the following steps:
a) providing a solid feedstock comprising or consisting of a solid glassy precursor for mechanochemical carbonation,
b) providing a gas comprising CO₂;
c) introducing said solid feedstock and said gas into a mechanical agitation unit; and
d) subjecting the material of said solid feedstock to a mechanical agitation operation in the presence of said gas in said mechanical agitation unit to obtain the mechanochemically carbonated glassy solid.

This method can be applied to various types of glassy precursors, advantageously resulting in unique mechanochemically carbonated glassy solids.

In another aspect, the invention provides a mechanochemically carbonated glassy solid obtainable by the method for producing the mechanochemically carbonated glassy solid described herein.

As will be shown in the appended examples, it was found that when such carbonated glassy solids, in particular the mechanochemically carbonated glassy solids described herein, are used as a filler in cement the compressive strength of the resulting concrete is surprisingly increased even beyond the values obtained when pure cement is employed. In addition, the set time for the strength development is strongly improved (shortened) compared to when non-carbonated glass is used as a filler. Furthermore, a much higher amount of this glassy solid can be used as a filler while still resulting in acceptable or even improved concrete properties.

It was furthermore found that the durability of the concrete produced using said carbonated glassy solids is considerably increased. Without wishing to be bound by any theory, the present inventors believe that this is due to enhanced micro and sub-microscale hydration, a reduced chloride permeability, reduced porosity of the concrete and/or passivation of free lime. Moreover, the increased oxygen content as compared to untreated precursors or feedstock may result in better dispersion in polar solvents, and better compatibility with materials that have epoxy or carboxyl functional groups.

Furthermore, as is shown in the appended examples, the water demand is decreased compared to pure cement, as well as compared to cement filled with non-carbonated glass. This is particularly surprising in view of the reduced particle size of the mechanochemically carbonated glass compared to the non-carbonated glass. A reduced particle size is generally associated with an increased water demand. The reduced water demand as compared to untreated feedstocks or pure cement may contribute to improved properties such as workability, compressive strength, permeability, watertightness, durability, weathering resistance, drying shrinkage and potential for cracking. For these reasons, limiting and controlling the amount of water in concrete is important for both constructability and service life. Thus, the present invention allows to have better control over the water demand. Without wishing to be bound by any theory, the present inventors believe that the methods of the present invention may effect a reduction in the amount of devitrified (i.e. crystallized) domains and thus an increase in the overall amorphous content of glassy materials. This in turn is believed to improve water demand. Without wishing to be bound by any theory, it is believed that the mechanochemical process of the invention may result in an increase in amorphous content when analyzed by XRD wherein at least some crystalline domains which may be present in a feedstock are maintained via an internal architecture in the form of microcrystallinity, which persists in a more generalized disordered structure. This disordered macro structure, thus, promotes higher reactivity and improves cement hydration.

Additionally, the production of the mechanochemically carbonated glassy solid relies on a cheap CO₂ capture technology platform capable of operating on dilute CO₂ streams, such as directly on a point source emissions of a combustion plant, such that a filler is provided which can be produced in an economically viable manner and which combines both the CO₂ emission reduction achieved by reduced cement production and the CO₂ emission reduction achieved by CO₂ sequestration. Thus, the carbonated glassy solids of the present invention, in particular the mechanochemically carbonated glassy solid of the invention, constitutes an excellent filler for many applications, combining distinct mechanical properties with a cost-efficient CO₂ capture technology.

In another aspect, the invention provides a composition comprising a carbonated glassy solid as described herein, in particular a mechanochemically carbonated glassy solid as described herein, and a further material selected from the group consisting of asphalt, geopolymers, cement, polymers and combinations thereof.

In another aspect, the invention provides a method for preparing a composition as described herein, said method comprising the following steps:
(i) providing a carbonated glassy solid as described herein, in particular a mechanochemically carbonated glassy solid as described herein;
(ii) providing a further material selected from the group consisting of asphalt, geopolymers, cement, polymers and combinations thereof; and
(iii) combining the carbonated glassy solid of step (i) with the material of step (ii).

In another aspect, the invention provides a method for preparing concrete or mortar, said method comprising the following steps:
(i) providing a carbonated glassy solid as described herein, in particular a mechanochemically carbonated glassy solid as described herein and a further material which is selected from the group consisting of asphalt, cement, geopolymers, and combinations thereof, optionally in the form of the composition as described herein wherein the further material is selected from the group consisting of asphalt, cement, geopolymers, and combinations thereof;
(ii) providing a construction aggregate; and
(iii) contacting, preferably mixing the carbonated glassy solid and the further material of step (i) with the construction aggregate of step (ii) and optionally water.

In another aspect, the invention provides concrete or mortar obtainable by a method for preparing concrete described herein.

In another aspect the invention provides the use of a carbonated glassy solid as described herein, in particular of a mechanochemically carbonated glassy solid as described herein:
- as a filler, preferably as a filler in a material selected from the group consisting of asphalt, geopolymer, cement, mortar, polymers and combinations thereof;
- as a partial replacement for asphalt, geopolymer or cement in concrete or mortar;
- to increase the compressive strength of concrete or mortar;
- to improve the durability of concrete or mortar;
- to improve the durability of concrete or mortar by reducing chloride permeability and/or porosity;
- to improve the strength activity index of concrete or mortar; and/or
- to reduce the water demand of concrete or mortar,
preferably,
- to concomitantly improve the strength activity index of concrete and reduce the water demand of concrete; or
- to concomitantly improve the strength activity index of mortar and reduce the water demand of mortar.

### Description of embodiments

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

Whenever reference is made throughout this document to a compound which is a salt, this should be construed to include the anhydrous form as well as any solvates (in particular hydrates) of this compound.

The term "solid glassy precursor" as used herein should be construed to include any amorphous solid material, typically obtained by melt-casting. The solid glassy precursor is preferably silica based (i.e. a solid material comprising SiO₂). The solid glassy precursor is preferably transparent. In all embodiments of the invention described herein, it is preferred that the solid glassy precursor is in the form of a monolithic glass, such as a melt-cast monolithic glass. It is preferred that the solid glassy precursor is essentially free of crystalline phases. In some embodiments, the amount of crystalline phases as determined by X-ray diffraction is less than 5 vol% of the solid glassy precursor or the solid feedstock, preferably less than 2 vol%, more preferably less than 1 vol% of the solid glassy precursor or the solid feedstock. A phase is considered crystalline if the intensity of its reflection if more than 10% above the background.

The term "carbonated glassy solid" is used herein to refer to a glassy solid obtainable by any process of direct carbonation, including dry carbonation and aqueous carbonation. Thus, it will be understood that the expression "carbonated glassy solid" as used herein covers a carbonated glassy solid obtainable via the dry mechanochemical carbonation described herein, via an aqueous carbonation process or via any other carbonation route, unless stated otherwise (e.g., by specifying "mechanochemically carbonated glassy solid").

The term "mechanochemically carbonated glassy solid" is used herein to refer to a glassy solid obtainable by the mechanochemical carbonation method of the present invention.

In accordance with the invention, the BET surface area as referred to herein is determined at a temperature of 77K using a sample mass of 0.1-0.5g. The BET surface area as referred to herein is determined using nitrogen. A preferred analysis method to determine the BET surface area comprises heating samples to 400 °C for a desorption cycle prior to surface area analysis. A suitable and thus preferred analysis apparatus for determining the BET surface area is a Micromeritics Gemini VII 2390 Surface Analyzer preferably equipped with a Micromeritics FlowPrep 060 flowing-gas degassing unit.

TGA as used herein refers to Thermogravimetric Analysis, a technique known to the person skilled in the art. A preferred TGA setup in the context of the present invention is a Setaram TAG 16 TGA/DSC dual chamber balance employing a 0.1-2 mg sample. In accordance with the invention, the TGA is performed under an inert atmosphere, such as nitrogen or argon.

In accordance with the invention, the particle size distribution characteristics referred to herein such as D10, D50 and D90 as well as the specific surface area (unless explicitly mentioned to be BET surface area) are determined by measuring with a laser light scattering particle size analyzer utilizing the Fraunhofer theory of light scattering, such as the Brookhaven laser particle sizer, Model Microbrook 2000LD or another instrument of equal or better sensitivity and reporting the data using a volume equivalent sphere model. As is known to the skilled person, the D50 is the mass median diameter, i.e. the diameter at which 50% of a sample's mass is comprised of smaller particles. Similarly, the D10 and D90 represent the diameter at which 10 or 90% of a sample's mass is comprised of smaller particles.

The Total Carbon (TC) content referred to herein is preferably determined in accordance with the method described on Soil Sampling and Methods of Analysis, 2nd Ed., CRC Press (2008), p. 244 and further, incorporated herein by reference. The Total Carbon (TC) content is always expressed herein as wt.% based on the total weight of the composition being measured, i.e. based on the total weight of the solid glassy precursor, or based on the total weight of the carbonated glassy solid.

In accordance with the invention, the compressive strength, strength-activity index and water demand as referred to herein is determined in accordance with ASTM C311/C311M-22. As will be evident to the skilled person, in performing these tests, the glassy precursor or the carbonated glass of the present invention was used instead of the "fly ash or natural pozzolan" specified by the standard.

For the purposes of the present disclosure, ideal gas law is assumed such that the vol% of a gas is considered as equal to the mol%.

### Carbonated glassy solid

As is shown in the appended examples, the present inventors have found (i) that it is possible to efficiently carbonate high silica content glassy precursors (such as soda-lime glass), and (ii) that it is possible to provide the corresponding carbonated glassy solids in a form which exhibits excellent performance in concrete. Hence, in a first aspect the invention provides a carbonated glassy solid obtainable by carbonation of a solid glassy precursor, said glassy precursor having a SiO₂ content of at least 65 wt.% (by total weight of the glassy precursor).

### Properties of the carbonated glassy solid

In preferred embodiments the carbonated glassy solid meets the strength requirements set out in ASTM C618-12a (2012) and/or CSA A3001-18 (2018).

In embodiments, the carbonated glassy solid has a specific surface area of at least or more than 0.3 m²/g, preferably at least or more than 0.5 m²/g, more preferably at least or more than 0.8 m²/g. For example, the carbonated glassy solid has a specific surface area of at least 0.3 m²/g, at least 0.35 m²/g, at least 0.40 m²/g, at least 0.45 m²/g, at least 0.50 m²/g, at least 0.55 m²/g, at least 0.70 m²/g, at least 0.65 m²/g, at least 0.70 m²/g, at least 0.75 m²/g, at least 0.8 m²/g, at least 0.85 m²/g, at least 0.90 m²/g, at least 0.95 m²/g, at least 1.0 m²/g, etc.

In preferred embodiments, the carbonated glassy solid has a specific surface area of less than or at most 50 m²/g, preferably less than or at most 30 m²/g, more preferably less than or at most 10 m²/g. For example, the carbonated glassy solid has a specific surface area of at most 50 m²/g, at most 48 m²/g, at most 46 m²/g, at most 44 m²/g, at most 42 m²/g, at most 40 m²/g, at most 38 m²/g, at most 36 m²/g, at most 34 m²/g, at most 32 m²/g, at most 30 m²/g, at most 28 m²/g, at most 26 m²/g, at most 24 m²/g, at most 22 m²/g, at most 20 m²/g, at most 18 m²/g, at most 16 m²/g, at most 14 m²/g, at most 12 m²/g, at most 10 m²/g, at most 8 m²/g, at most 6 m²/g, at most 4 m²/g, at most 2 m²/g, etc.

In more preferred embodiments, the carbonated glassy solid has a specific surface area of less than 5 m²/g, preferably less than 3 m²/g, more preferably less than 2 m²/g. For example, the carbonated glassy solid has a specific surface area of less than 5.0 m²/g, less than 4.5 m²/g, less than 4.0 m²/g, less than 3.5 m²/g, less than 3.0 m²/g, less than 2.5 m²/g, less than 2.0 m²/g, less than 1.5 m²/g, etc.

The inventors have observed that a carbonated glassy solid having a specific surface area within specific ranges provided surprising results of the carbonation when compared to untreated precursors. Hence, in accordance with highly preferred embodiments of the invention, the carbonated glassy solid has a specific surface area of 0.3-50 m²/g, preferably 0.5-50 m²/g, more preferably 0.8-50 m²/g, such as a specific surface area in the range of 0.3-50 m²/g, preferably 0.3-30 m²/g, more preferably 0.3-10 m²/g; a specific surface area in the range of 0.5-50 m²/g, preferably 0.5-30 m²/g, more preferably 0.5-10 m²/g; a specific surface area in the range of 0.8-50 m²/g, preferably 0.8-30 m²/g, more preferably 0.8-10 m²/g; a specific surface area in the range of 0.3-5.0 m²/g, preferably 0.3-3.0 m²/g, more preferably 0.3-2.0 m²/g; a specific surface area in the range of 0.5-5.0 m²/g, preferably 0.5-3.0 m²/g, more preferably 0.5-2.0 m²/g; a specific surface area in the range of 0.8-5.0 m²/g, preferably 0.8-3.0 m²/g, more preferably 0.8-2.0 m²/g.

Without wishing to be bound by any theory, the present inventors believe that the specific surface area increase effected by the dry mechanochemical carbonation method of another aspect of the invention (which is described herein elsewhere) is associated with the beneficial properties observed (such as the excellent strength activity index, and reduced water demand). Hence, in embodiments of the invention, the carbonated glassy solid described herein is provided which is obtainable by concomitant carbonation and specific surface area increase of a solid glassy precursor wherein a ratio of the specific surface area of the glassy solid to the specific of the solid glassy precursor is at least 5:1, preferably at least 7:1, more preferably at least 10:1.

Without wishing to be bound by any theory, the present inventors believe that the BET surface area increase effected by the dry mechanochemical carbonation method of another aspect of the invention (which is described herein elsewhere) is associated with the beneficial properties observed (such as the excellent strength activity index, and reduced water demand). Hence, in embodiments of the invention, the carbonated glassy solid described herein is provided which is obtainable by concomitant carbonation and BET surface area increase of a solid glassy precursor wherein the ratio of the BET surface area of the mechanochemically carbonated glassy solid to the BET surface area of the glassy precursor is at least 4:1, preferably at least 8:1, more preferably at least 15:1.

Without wishing to be bound by any theory, the present inventors believe that the BET surface area increase effected by the dry mechanochemical carbonation method of another aspect of the invention (which is described herein elsewhere) may largely be attributed to an increase in the number of pores, observed by a decrease in the average pore width and an increase in the total pore surface area. Hence, in embodiments of the invention, the carbonated glassy solid is provided which is obtainable by concomitant carbonation and BET surface area increase of a solid glassy precursor wherein the BJH desorption cumulative surface area of pores of the carbonated glassy solid is at least 110%, preferably at least 120%, more preferably at least 150%, of the BJH desorption cumulative surface area of pores of the solid glassy precursor and the desorption average pore width (4V/A by BET) of the carbonated glassy solid is no more than 90%, preferably no more than 85%, more preferably no more than 80%, of the desorption average pore width (4V/A by BET) of the solid glassy precursor.

In embodiments of the invention, the carbonated glassy solid has one, two, or three, preferably three, of the following characteristics:
- a D10 within the range of 0.005-5 µm, preferably 0.01-2 µm, most preferably 0.1-1.5 µm;
- a D50 within the range of 0.1-50 µm, preferably 0.5-25 µm, most preferably 1-10 µm;
- a D90 within the range of 0.5-100 µm, preferably 1-50 µm, most preferably 5-25 µm.

In embodiments of the invention, the carbonated glassy solid has a total carbon content of at least 0.1 wt.%, preferably at least 0.15 wt.%, more preferably at least 0.2 wt.%.

In embodiments of the invention, the carbonated glassy solid has a strength activity index (SAI) at day 7 which is at least 60%, preferably at least 80%.

In embodiments of the invention, the carbonated glassy solid has a strength activity index (SAI) at day 28 which is at least 80%, preferably at least 100%.

In embodiments of the invention, the carbonated glassy solid has a water demand which is less than 96%, preferably less than 95%.

### Properties of the glassy solid precursor

In embodiments, the solid glassy precursor comprises recycled glass, preferably recycled soda-lime glass, more preferably recycled soda-lime container glass or flat glass, most preferably recycled soda-lime container glass. Typical examples are soda-lime glass bottles or jars which have been used and afterwards crushed or ground to form a recycled or waste particulate glass material which can be carbonated to form the carbonated glassy solid of the present invention.

In embodiments of the invention, the solid glassy precursor has:
- a SiO₂ content of at least 70 wt.% (by total weight of the glassy precursor); and/or
- a total amount of alkaline earth metal oxides and hydroxides of less than 20 wt.% (by total weight of the glassy precursor), preferably less than 15 wt.% (by total weight of the glassy precursor).

In preferred embodiments of the invention, the solid glassy precursor has:
- a SiO₂ content of at least 70 wt.% (by total weight of the glassy precursor;
- a B₂O₃ content of at least 5 wt% (by total weight of the glassy precursor), preferably at least 7 wt.% (by total weight of the glassy precursor); and
- preferably a total amount of alkaline earth metal oxides and hydroxides of less than 4 wt.% (by total weight of the glassy precursor), preferably less than 1 wt.% (by total weight of the glassy precursor). Such a glass corresponds to a borosilicate glass.

In preferred embodiments of the invention, the glassy precursor has:
- a SiO₂ content of at least 70 wt.% (by total weight of the glassy precursor;
- a Na₂O content of at least 5 wt% (by total weight of the glassy precursor), preferably at least 10 wt.% (by total weight of the glassy precursor); and
- preferably having a total amount of alkaline earth metal oxides and hydroxides of at least 5 wt.% (by total weight of the glassy precursor), preferably at least 10 wt.% (by total weight of the glassy precursor). Such a glass corresponds to a soda-lime glass.

Without wishing to be bound by any theory, it is believed that the presence of at least some alkaline earth metal oxides or hydroxides facilitates carbonation. Hence, according to embodiments or preferred embodiments of the invention, the solid glassy precursor, as described herein, has a total of alkaline earth metal oxides and hydroxides of at least 0.01 wt.%, preferably at least 0.05 wt.%. Therefore, it will be understood that according to some (preferred) embodiments the solid glassy precursor has a total of alkaline earth metal oxides and hydroxides in the range of 0.01-20 wt.%.

### Method for the production of mechanochemically carbonated glassy solid and mechanochemically carbonated glassy solid obtainable thereby

Without wishing to be bound by any theory, the present inventors believe that the dry mechanochemical carbonation method of the present invention imparts unique and desirable properties to the carbonated glass obtainable by this method. For example, it is believed that the unique surface area and pore properties effected by the dry mechanochemical carbonation method of the present invention is important to achieve the surprising performance of the materials in e.g. concrete.

In a further aspect, the invention provides a method for producing a mechanochemically carbonated glassy solid, said method comprising the following steps:
a) providing a solid feedstock comprising or consisting of a solid glassy precursor;
b) providing a gas comprising CO₂;
c) introducing said solid feedstock and said gas into a mechanical agitation unit; and
d) subjecting the material of said solid feedstock to a mechanical agitation operation in the presence of said gas in said mechanical agitation unit to obtain the mechanochemically carbonated glassy solid.

### Process description

The term "solid feedstock" is to be interpreted as a solid material consisting of or comprising a solid glassy precursor. The solid glassy precursor may be mixed with other materials (e.g. fly ash) to form the solid feedstock. However, preferably, the solid feedstock consists essentially of a solid glassy precursor as this allows optimisation of process conditions to achieve the desired carbonated glass properties without having to take into account the properties of other materials present in the feedstock.

It is within the capacity of one skilled in the art, in light of the guidance provided in the present disclosure, to adapt the relevant process parameters such that a mechanochemically carbonated glassy solid is obtained which has the properties recited herein.

The gas provided in step (b) may be any gas stream comprising CO₂, such as regular air, a waste gas stream having a low CO₂ concentration, or concentrated CO₂ streams.

In embodiments of the method described herein the gas provided in step (b) is regular air.

In highly preferred embodiments of the method described herein the gas provided in step (b) is a combustion flue gas, in particular a flue gas from fossil fuel combustion, wood pellet combustion, biomass combustion or municipal waste combustion. Fossil fuel combustion may be coal, petroleum coke, petroleum, natural gas, shale oil, bitumens, tar sand oil, or heavy oils combustion, or any combination thereof. The combustion flue gas may optionally have been treated to reduce the water content, the SO₂ content, and/or the NOx content.

The CO₂ concentration in the gas provided in step (b) is preferably at least 0.1 vol%, more preferably at least 0.5 vol%. Typical CO₂ concentrations for combustion flue gas are in the range of 1-15 vol%, such as 2-10 vol%, such that it is preferred that the gas provided in step (b) has a CO₂ concentration in the range of 1-15 vol%, such as 2-10 vol%. In alternative embodiments of the invention, the gas provided in step (b) comprises at least 80 vol% CO₂, preferably at least 95 vol% CO₂. In some embodiments of the invention, the gas provided in step (b) comprises at least 80 vol% CO₂, preferably at least 95 vol% CO₂ and less than 1000 ppm (v/v) H₂O, preferably less than 100 ppm (v/v) H₂O. In some embodiments, the gas provided in step (b) comprises CO₂ in at least 0.1 vol% and H₂O in the range of 5-25 vol%. For example, in case of flue gas, the gas provided in step (b) preferably comprises CO₂ in the range of 1-15 vol%, such as 2-10 vol% and H₂O in the range of 5-25 vol%, such as 15-20 vol%. The gas is typically not in a supercritical state as this is not necessary for the mild mechanochemical carbonation process of the present invention. Hence in any embodiment of the invention, it is highly preferred that the gas is not in a supercritical state.

In some embodiments of the invention, the method described herein is provided with the provision that the temperature and pressure during step (d) are such that the pressure is lower than the saturated vapour pressure of water at the temperature in the mechanical agitation unit.

The expression "in the presence of said gas" in step (d) should be construed to mean that the atmosphere inside the mechanical agitation unit consists essentially of the gas provided in step (b) when step (d) is initiated. It will be understood by the skilled person that the composition of the gas will change as the reaction progresses unless the reactor (the mechanical agitation unit) is continuously purged or replenished.

In general, step (d) can be performed at atmospheric pressure, below atmospheric pressure or above atmospheric pressure. In general it is preferred that step (d) is performed at or above atmospheric pressure. Hence, it is preferred that step (d) is performed at a pressure of at least about 100 kPa (e.g. at least 101.325 kPa). In preferred embodiments of the invention, step (d) is performed at a pressure of more than around 300 kPa (e.g., 303.975 kPa), preferably more than around 600 kPa (e.g., 607.95 kPa). In alternative embodiments of the invention, step (d) is performed at pressures of less than around 100 kPa (e.g. at least 101.325 kPa), such as less than 50 kPa or less than 10 kPa. It will be understood by the skilled person that (if not actively maintained) the pressure of the gas will change as the reaction progresses. In these embodiments it should be understood that the pressure inside the mechanical agitation unit is as specified herein when step (d) is initiated. In some embodiments the pressure inside the mechanical agitation unit is as specified herein throughout step (d).

In highly preferred embodiments of the method described herein, in order to stimulate carbonation, step (d) is performed at a temperature of less than 150 °C, preferably less than 100 °C, preferably less than 90 °C, more preferably less than 80 °C, most preferably less than 75 °C. In highly preferred embodiments of the invention, step (d) is performed at a temperature within the range of 45-85 °C, preferably 55-70 °C. In preferred embodiments of the invention, no active heating is applied and any increase in temperature is attributed to friction resulting from the mechanical agitation or to exothermic reactions taking place during the mechanochemical carbonation. The temperature is preferably determined on the solid material in the reactor (i.e. the mechanical agitation unit) during processing.

The low temperature requirement of the present process means that no fossil fuels are required, and electric heating means (or low caloric value green fuel sources) can realistically be used to supply heat in case friction caused by the mechanical agitation is insufficient to reach the desired temperature, such as more than 45 °C. In this way, fossil fuels can be avoided throughout the whole production chain.

As with any chemical process, the appropriate reaction time is highly dependent on the extent of carbonation desired, the surface area desired, as well as the pressure, temperature and mechanochemical agitation applied and can easily be determined by sampling material on a regular basis and monitoring reaction progress e.g. via BET analysis, specific surface area, particle size analysis and Total Carbon determination as explained herein.

The present inventors have furthermore found that the mechanochemical carbonation methods described herein may advantageously be performed without employing additional oxidizing agents such as acids. Hence, the mechanochemical carbonation methods described herein are preferably performed without employing a strong acid, preferably without employing any further oxidizing agent other than the gas provided in step (b).

In preferred embodiments of the invention, the mechanical agitation operation of step (d) comprises grinding, milling, mixing, stirring (such as low-speed stirring or high-speed stirring), shearing (such as high-torque shearing), shaking, blending, pulverizing, powderizing, crushing, crumbling, a fluidized bed or ultrasonication, preferably grinding, milling, mixing, stirring (such as low-speed stirring or high-speed stirring), shearing (such as high-torque shearing), or ultrasonication. The present inventors have found that the mechanochemical carbonation process is facilitated if the mechanochemical agitation operation of step (d) the mechanochemical agitation operation of step (d) is performed in the presence of grinding or milling media, preferably balls or beads. A preferred material is stainless steel or aluminum oxide. In such highly preferred embodiments, the mechanical agitation operation may be simply rotating the mechanical agitation unit containing the solid feedstock, the grinding or milling media, and the gas. For example, grinding or milling media can be made from steel (e.g. AISI H13, modified H10), chrome white cast irons (e.g. ASTM A532), molybdenum steel (e.g. AISI M2, M4, M-42), chromium-based steels (e.g. H11, H12, H13 CPM V9, ZDP-189) or other media with a target HRC hardness of 60. Such grinding media can be utilized with or without surface treatments such as nitriding and carburizing. This can conveniently be performed in a rotating drum. It will be understood that the product obtainable by the process of the invention when performed in a rotating drum, may also be obtainable using alternative grinding or milling techniques known to the skilled person.

In preferred embodiments of the invention, step (d) is performed in the presence of a catalyst, preferably a metal oxide catalyst, such as a transition metal oxide catalyst. Examples of suitable catalysts are selected from the group consisting of iron oxides, cobalt oxides, ruthenium oxides, titanium oxides, nickel oxides, aluminium oxides and combinations thereof.

Hence, as will be understood from the above, in highly preferred embodiments of the invention, step (d) comprises grinding, milling, mixing, stirring (such as low-speed stirring or high-speed stirring), shearing (such as high-torque shearing), shaking, blending, pulverizing, powderizing, crushing, crumbling, a fluidized bed or ultrasonication, preferably grinding, milling, mixing, stirring (such as low-speed stirring or high-speed stirring), shearing (such as high-torque shearing), or ultrasonication, in the presence of grinding or milling media and a metal oxide catalyst.

The present inventors have found that it is advantageous with a view to the efficiency of the mechanochemical carbonation (e.g. reaction time, CO₂ absorption and particle size reduction) to employ media as described herein before coated with said metal oxide catalyst and/or to employ a mechanical agitation unit (or parts thereof) which are coated with said metal oxide catalyst. As explained herein elsewhere, the mechanical agitation operation may be simply rotating the mechanical agitation unit containing the solid feedstock or the solid glassy precursor for mechanochemical carbonation, the grinding or milling media, the metal oxide catalyst and the gas. This can conveniently be performed in a rotating drum.

As will be clear from the present description, step (d) is a substantially dry process. While some moisture may be present, step (d) is not performed on an aqueous solution or slurry. The present inventors have found that this greatly improves energy efficiency (as no water has to be removed afterwards) and imparts unique properties on the resulting carbonated glassy solids, yielding materials which are substantially different from e.g. aqueous carbonation materials. This is also reflected in their distinct properties, e.g. when used as a filler in concrete. In embodiments of the invention, the solid feedstock preferably has a moisture content of less than 10 wt.% (by total weight of the solid feedstock), preferably less than 5 wt.%, more preferably less than 2 wt.%.

In particular, the present inventors have found that it is important that step (d) is carried out such that certain extents of carbonation, size reduction and/or surface area increase are effect during step (d), i.e. during the combined carbonation and mechanical agitation. This results in markedly different materials from materials which were e.g. milled and subsequently carbonated.

Thus, in highly preferred embodiments, the method of the invention is provided wherein carbonation, size reduction and/or surface area increase are effected during step (d) such that the method has one, two or all three, preferably all three, of the following characteristics:
- the ratio of the total carbon content of the mechanochemically carbonated glassy solid obtained in step (d) to the total carbon content of the solid glassy precursor of step (a) is at least 1.5:1, preferably at least 2:1, more preferably at least 3:1;
- the ratio of the D50 of the mechanochemically carbonated glassy solid obtained in step (d) to the D50 of the solid glassy precursor of step (a) is less than 0.5:1, preferably less than 0.1:1, more preferably less than 0.05:1;
- the ratio of the specific surface area of the glassy solid to the specific of the solid glassy precursor is at least 3:1, preferably at least 6:1, more preferably at least 10:1. In some embodiments of the invention, the specific surface are of the glassy solid to the specific of the solid glassy precursor is at least 15:1.
The skilled person will understand that, as the material of step (a) is fed to step (d), this means that the carbonation, size reduction and/or surface area specified above is effected during step (d).

Without wishing to be bound by any theory, the present inventors believe that the BET surface area increase effected by the dry mechanochemical carbonation method is associated with the beneficial properties observed (such as the excellent strength activity index, and reduced water demand). Hence, in embodiments of the invention, the method of the invention is provided wherein carbonation and BET surface area increase are effected during step (d) such that the ratio of the BET surface area of the mechanochemically carbonated glassy solid to the BET surface area of the glassy precursor is at least 4:1, preferably at least 8:1, more preferably at least 15:1.

In particularly preferred embodiments of the method of the invention, the BJH desorption cumulative surface area of pores of the carbonated glassy solid obtained in step (d) is at least 110%, preferably at least 120%, more preferably at least 150%, of the BJH desorption cumulative surface area of pores of the solid glassy precursor and the desorption average pore width (4V/A by BET) of the carbonated glassy solid obtained in step (d) is no more than 90%, preferably no more than 85%, more preferably no more than 80%, of the desorption average pore width (4V/A by BET) of the solid glassy precursor.

### Properties of the glassy solid precursor used in the mechanochemical carbonation method of the present invention

In preferred embodiments of the method described herein, the solid glassy precursor for mechanochemical carbonation is a particulate solid material, such as a powder.

In preferred embodiments of the method described herein, the solid glassy precursor is a particulate solid material which has a specific surface area of less than 0.5 m²/g, preferably less than 0.2 m²/g, more preferably less than 0.1 m²/g.

In embodiments of the method described herein, the solid glassy precursor for mechanochemical carbonation has one, two, or three, preferably three, of the following characteristics:
- a D10 within the range of 10-200 µm, preferably 20-150 µm, most preferably 35-60 µm;
- a D50 within the range of 30-500 µm, preferably 50-300 µm, most preferably 80-250 µm;
- a D90 within the range of 100-1000 µm, preferably 125-750 µm, most preferably 150-500 µm.

In preferred embodiments of the method described herein, the solid glassy precursor for mechanochemical carbonation is selected from soda-lime glass, lead glass, borosilicate glass, aluminosilicate glass, fused silica glass, quartz glass, preferably soda-lime glass. In highly preferred embodiments, the solid glassy precursor for mechanochemical carbonation comprises recycled glass, preferably recycled soda-lime glass, more preferably recycled soda-lime container glass or flat glass, most preferably recycled soda-lime container glass. "Recycled" as used in this context means that the glass is not virgin material but has been used. Typical examples are soda-lime glass bottles or jars which have been used and afterwards crushed or ground to form a recycled or waste particulate glass material which can be used as a feedstock for the method of the present invention.

In embodiments of the invention, the solid glassy precursor has:
- a SiO₂ content of at least 70 wt.% (by total weight of the glassy precursor); and/or
- a total amount of alkaline earth metal oxides and hydroxides of less than 20 wt.% (by total weight of the glassy precursor), preferably less than 15 wt.% (by total weight of the glassy precursor).

In preferred embodiments of the invention, the solid glassy precursor has:
- a SiO₂ content of at least 70 wt.% (by total weight of the glassy precursor;
- a B₂O₃ content of at least 5 wt% (by total weight of the glassy precursor), preferably at least 7 wt.% (by total weight of the glassy precursor); and
- preferably a total amount of alkaline earth metal oxides and hydroxides of less than 4 wt.% (by total weight of the glassy precursor), preferably less than 1 wt.% (by total weight of the glassy precursor). Such a glass corresponds to a borosilicate glass.

In preferred embodiments of the invention, the glassy precursor has:
- a SiO₂ content of at least 70 wt.% (by total weight of the glassy precursor;
- a Na₂O content of at least 5 wt% (by total weight of the glassy precursor), preferably at least 10 wt.% (by total weight of the glassy precursor); and
- preferably having a total amount of alkaline earth metal oxides and hydroxides of at least 5 wt.% (by total weight of the glassy precursor), preferably at least 10 wt.% (by total weight of the glassy precursor). Such a glass corresponds to a soda-lime glass.

Without wishing to be bound by any theory, it is believed that the presence of at least some alkaline earth metal oxides or hydroxides facilitates carbonation. Hence, according to embodiments or preferred embodiments of the invention, the solid glassy precursor, as described herein, has a total of alkaline earth metal oxides and hydroxides of at least 0.01 wt.%, preferably at least 0.05 wt.%. Therefore, it will be understood that according to some (preferred) embodiments the solid glassy precursor has a total of alkaline earth metal oxides and hydroxides in the range of 0.01-20 wt.%.

### Properties of the carbonated glassy solid obtained in step (d)

In preferred embodiments the carbonated glassy solid obtained in step (d) meets the strength requirements set out in ASTM C618-12a (2012) and CSA A3001-18 (2018).

In embodiments, the carbonated glassy solid obtained in step (d) has a specific surface area of at least or more than 0.3 m²/g, preferably at least or more than 0.5 m²/g, more preferably at least or more than 0.8 m²/g. For example, the carbonated glassy solid has a specific surface area of at least 0.3 m²/g, at least 0.35 m²/g, at least 0.40 m²/g, at least 0.45 m²/g, at least 0.50 m²/g, at least 0.55 m²/g, at least 0.70 m²/g, at least 0.65 m²/g, at least 0.70 m²/g, at least 0.75 m²/g, at least 0.8 m²/g, at least 0.85 m²/g, at least 0.90 m²/g, at least 0.95 m²/g, at least 1.0 m²/g, etc.

In preferred embodiments, the carbonated glassy solid obtained in step (d) has a specific surface area of less than or at most 50 m²/g, preferably less than or at most 30 m²/g, more preferably less than or at most 10 m²/g. For example, the carbonated glassy solid obtained in step (d) has a specific surface area of at most 50 m²/g, at most 48 m²/g, at most 46 m²/g, at most 44 m²/g, at most 42 m²/g, at most 40 m²/g, at most 38 m²/g, at most 36 m²/g, at most 34 m²/g, at most 32 m²/g, at most 30 m²/g, at most 28 m²/g, at most 26 m²/g, at most 24 m²/g, at most 22 m²/g, at most 20 m²/g, at most 18 m²/g, at most 16 m²/g, at most 14 m²/g, at most 12 m²/g, at most 10 m²/g, at most 8 m²/g, at most 6 m²/g, at most 4 m²/g, at most 2 m²/g, etc.

In more preferred embodiments, the carbonated glassy solid obtained in step (d) has a specific surface area of less than 5 m²/g, preferably less than 3 m²/g, more preferably less than 2 m²/g. For example, the carbonated glassy solid obtained in step (d) has a specific surface area of less than 5.0 m²/g, less than 4.5 m²/g, less than 4.0 m²/g, less than 3.5 m²/g, less than 3.0 m²/g, less than 2.5 m²/g, less than 2.0 m²/g, less than 1.5 m²/g, etc.

The inventors have observed that a carbonated glassy solid having specific surface area within specific ranges have particular properties when considering performance, handling, etc. in comparison to untreated precursors or even carbonated materials with other surface areas. Hence, in accordance with highly preferred embodiments of the invention, the carbonated glassy solid has specific surface area of 0.3-50 m²/g, preferably 0.5-50 m²/g, more preferably 0.8-50 m²/g, such as a specific surface area in the range of 0.3-50 m²/g, preferably 0.3-30 m²/g, more preferably 0.3-10 m²/g; a specific surface area in the range of 0.5-50 m²/g, preferably 0.5-30 m²/g, more preferably 0.5-10 m²/g; a specific surface area in the range of 0.8-50 m²/g, preferably 0.8-30 m²/g, more preferably 0.8-10 m²/g; a specific surface area in the range of 0.3-5.0 m²/g, preferably 0.3-3.0 m²/g, more preferably 0.3-2.0 m²/g; a specific surface area in the range of 0.5-5.0 m²/g, preferably 0.5-3.0 m²/g, more preferably 0.5-2.0 m²/g; a specific surface area in the range of 0.8-5.0 m²/g, preferably 0.8-3.0 m²/g, more preferably 0.8-2.0 m²/g.

In embodiments of the invention, the carbonated glassy solid obtained in step (d) has one, two, or three, preferably three, of the following characteristics:
- a D10 within the range of 0.005-5 µm, preferably 0.01-2 µm, most preferably 0.1-1.5 µm;
- a D50 within the range of 0.1-50 µm, preferably 0.5-25 µm, most preferably 1-10 µm;
- a D90 within the range of 0.5-100 µm, preferably 1-50 µm, most preferably 5-25 µm.

In embodiments of the invention, the carbonated glassy solid obtained in step (d) has a total carbon content of at least 0.1 wt.%, preferably at least 0.15 wt.%, more preferably at least 0.2 wt.%.

In embodiments of the invention, the carbonated glassy solid obtained in step (d) has a strength activity index (SAI) at day 7 which is at least 60%, preferably at least 80%.

In embodiments of the invention, the carbonated glassy solid obtained in step (d) has a strength activity index (SAI) at day 28 which is at least 80%, preferably at least 100%.

In embodiments of the invention, the carbonated glassy solid obtained in step (d) has a water demand which is less than 96%, preferably less than 95%.

### The carbonated glassy solid obtainable by the method described herein

The present inventors have found that the mechanochemical carbonation described herein imparts unique properties on the resulting carbonated glassy solids, yielding materials which are substantially different from e.g. aqueous carbonation materials. This is also reflected in their distinct properties, e.g. when used as a filler in concrete. In particular, the present inventors have found that it is important that step (d) is carried out such that certain extents of carbonation, size reduction and/or surface area increase are effect during step (d), i.e. during the combined carbonation and mechanical agitation. This results in markedly different materials from materials which were e.g. carbonated in an aqueous environment, or even materials which were milled and subsequently carbonated.

Hence, in another aspect the invention provides the mechanochemically carbonated glassy solid obtainable by the method for producing mechanochemically carbonated glassy solid described herein.

As will be understood by the skilled person in light of the present disclosure, the mechanochemically carbonated glassy solid of the present invention constitutes an excellent filler for many applications, combining distinct mechanical properties with a cost-efficient CO₂ sequestration approach.

### Composition comprising a carbonated glassy solid, and method for the preparation thereof

Hence, in another aspect the invention provides a composition comprising a carbonated glassy solid as described herein and a further material selected from the group consisting of asphalt, geopolymers, cement, polymers, and combinations thereof, preferably cement, more preferably Portland cement. The glassy solid is preferably the mechanochemically carbonated glassy solid described herein.

In embodiments, the further material is a polymer selected from thermoplastic polymers and thermosetting polymers. In preferred embodiments, the further component is a polymer selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably cis-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadienestyrene, nitrile rubber, styrenebutadiene, ethylene-vinyl acetate, copolymers thereof and combinations thereof, more preferably a polyolefin, such as polypropylene, polyethylene, copolymers thereof and combinations thereof. The term "polymer" as used herein includes copolymers, such as block copolymers.

In highly preferred embodiments the further material is selected from cement, asphalt, geopolymer or combinations thereof.

In accordance with the invention, the cement may be a hydraulic or non-hydraulic cement. In preferred embodiments, the cement is a hydraulic cement, such as Portland cement. In highly preferred embodiments of the invention, the cement is one of the cements defined in EN197-1 (2011), preferably Portland cement as defined in EN197-1 (2011).

In embodiments of the invention, the composition comprises more than 0.1 wt.% (by total weight of the composition), preferably more than 1 wt.%, more preferably more than 5 wt.% of the carbonated glassy solid and/or more than 0.1 wt.% (by total weight of the composition), preferably more than 1 wt.%, more preferably more than 20 wt.% of the further material.

In embodiments of the invention, the composition comprises less than 60 wt.% (by total weight of the composition), preferably less than 50 wt.%, more preferably less than 45 wt.% of the carbonated glassy solid and/or less than 95 wt.% (by total weight of the composition), preferably less than 90 wt.%, more preferably less than 80 wt.% of the further material.

In embodiments of the invention, the composition is provided wherein the weight:weight ratio of the carbonated glassy solid to the further material is within the range of 1:9 to 2:1, preferably within the range of 1:8 to 1:1, more preferably within the range of 1:6 to 5:6.

In embodiments of the invention, the composition comprises 5-70 wt.% (by total weight of the composition), preferably 10-60 wt.%, more preferably 20-50 wt.% of the carbonated glassy solid and 30-95 wt.% (by total weight of the composition), preferably 40-90 wt.%, preferably 50-80 wt.% of the further material.

In embodiments of the invention, the composition comprises less than 5 wt.% (by total weight of the composition water, preferably less than 1 wt.%, more preferably less than 0.1 wt.%. The amount of water can suitably be determined as the mass loss up to 120°C measured by TGA employing a temperature trajectory wherein the temperature was increased from room temperature to 800°C at a rate of 10 °C/min.

In embodiments of the invention, the composition consists of the carbonated glassy solid and the further material.

In another aspect the invention provides a method for preparing a composition as described herein, said method comprising the following steps:
(i) providing a carbonated glassy solid as described herein, preferably a mechanochemically carbonated glassy solid as described herein;
(ii) providing a further material selected from the group consisting of asphalt, cement, geopolymers, polymers and combinations thereof;
(iii) combining the carbonated glassy solid of step (i) with the material of step (ii).

### Concrete or mortar comprising a composition and a carbonated glassy solid, and method for the preparation thereof

In another aspect the invention provides a method for preparing concrete or mortar, said method comprising the following steps:
(i) providing a carbonated glassy solid as described herein, in particular a mechanochemically carbonated glassy solid as described herein and a further material which is selected from the group consisting of asphalt, cement, geopolymers, and combinations thereof, optionally in the form of the composition as described herein wherein the further material is selected from the group consisting of asphalt, cement, geopolymers, and combinations thereof;
(ii) providing a construction aggregate;
(iii) contacting, preferably mixing the carbonated glassy solid and the further material of step (i) with the construction aggregate of step (ii) and optionally water.

In another aspect, the invention provides concrete or mortar obtainable by the method for preparing concrete described herein.

In embodiments of the invention, the construction aggregate is selected from the group consisting of sand, gravel, crushed stone, slag, recycled concrete, clay, pumice, perlite, vermiculite and combinations thereof. In preferred embodiments the construction aggregate is one of the aggregates defined in EN 13043 (2002), EN 13383 (2019), EN 12620 (2013) or EN 13242 (2013), preferably the construction aggregate is one of the aggregates defined in EN 12620 (2013).

In preferred embodiments of the invention, step (iii) further comprises contacting, preferably mixing the carbonated glassy solid and the further material of step (i) with the construction aggregate of step (ii) and water. In accordance with the invention, the carbonated glassy solid and the further material of step (i), the construction aggregate of step (ii) and the water may be contacted, preferably mixed at substantially the same time, or in a step-wise manner wherein the composition of step (i) is first contacted, preferably mixed with water, before being contacted, preferably mixed with the construction aggregate of step (ii).

In another aspect the invention provides the use of a carbonated glassy solid as described herein, in particular of a mechanochemically carbonated glassy solid as described herein:
- as a filler, preferably as a filler in a material selected from the group consisting of asphalt, geopolymer, cement, mortar, polymers and combinations thereof;
- as a partial replacement for asphalt, geopolymer, or cement in concrete or mortar;
- to increase the compressive strength of concrete or mortar;
- to improve the durability of concrete or mortar;
- to improve the durability of concrete or mortar by reducing chloride permeability and/or porosity;
- to improve the strength activity index of concrete or mortar; and/or
- to reduce the water demand of concrete or mortar,
preferably,
- to concomitantly improve the strength activity index of concrete and reduce the water demand of concrete; or
- to concomitantly improve the strength activity index of mortar and reduce the water demand of mortar.

It will be understood by the skilled person that the embodiments of the invention described herein in the context of the (mechanochemically) carbonated glassy solid or the composition, especially in relation to the features of the (mechanochemically) carbonated glassy solid or in relation to the features of the further material, are equally applicable to the method for preparing said composition described herein, the method for preparing concrete described herein and the uses of the (mechanochemically) carbonated glassy solid described herein.

### Examples

Particle Size Distribution and specific surface area measurements were carried out on a Brookhaven laser particle sizer, Model Microbrook 2000LD using utilizing the Fraunhofer theory of light scattering and reporting the data using a volume equivalent sphere model.

Compressive strength, strength activity index and water demand was measured in accordance with ASTM C311/C311M-22. As will be evident to the skilled person, in performing these tests, the glassy precursor and the carbonated glass of the present invention was used instead of the "fly ash or natural pozzolan" specified by the standard.

Total carbon content was determined in accordance with the method described on Soil Sampling and Methods of Analysis, 2nd Ed., CRC Press (2008), pg. 244 and further.

### Example 1

Mechanochemically carbonated glassy solids were produced by inserting 2.1 kg of solid glassy precursor (crushed recycled soda-lime glass) into a pressure cell with 150 kg of milling media (ceramic ball bearings of 10 mm size). The cell is pressurized with concentrated CO₂ gas (>95 vol%) to an initial pressure of 441 kPa, and rotated on rollers at 38 RPM for 24 hours to obtain mechanochemically carbonated glass. The reaction was initiated at room temperature and no heating or cooling was applied. The ceramic bearings have an Al₂O₃ content of 92 wt.% such that they also served as catalyst. The properties of the glassy precursor and the obtained mechanochemically carbonated glass are shown in the below table.

| | **D10 (µm)** | **D50 (µm)** | **D90 (µm)** | **DLS specific surface area (m²/g)** | **Total Carbon (wt.%)** | **% Water Deman d** | **SAI 7-day, %** | **SAI 28-day, %** |
|---|---|---|---|---|---|---|---|---|
| **Glassy precursor** | 30.5 | 110. 0 | 215. 8 | 0.062 | 0.071 | 97.9 | 59.07 | 67.6 |
| **Carbonate d material** | 0.9 | 2.6 | 12.8 | 1.097 | 0.265 | 94.4 | 87.6 | 111.0 |

As can be observed from the Strength Activity Index (SAI) measurements and the water demand measurements, the mechanochemically carbonated glassy solid of the present invention provides an unexpectedly reduced water demand and increased strength compared to the uncarbonated counterpart and even compared to the Portland cement control.

### Example 2

Mechanochemically carbonated glassy solids were produced by inserting 5.1 kg of glassy precursor into a pressure cell with 150 kg of milling media (ceramic ball bearings of 10 mm size). The cell is pressurized with flue gas (CO₂: 8-10 vol%; H₂O: 18-20 vol %; O₂: 2-3 vol %; N₂: 67-72 vol %) to an initial pressure of 448 kPa, and rotated on rollers at 38 RPM for 3 days to obtain mechanochemically carbonated glass. The reaction was initiated at room temperature and no heating or cooling was applied. The ceramic bearings have an Al₂O₃ content of 92 wt.% such that they also served as catalyst. The properties of the glassy precursor and the obtained mechanochemically carbonated glass are shown in the below table.

The glassy precursor was waste glass material from hollow microsphere manufacturing having:
(a) between 50 wt % and 90 wt % of SiO₂ ;
(b) between 2 wt % and 20 wt % of alkali metal oxides;
(c) between 1 wt % and 30 wt % of B₂O₃ ;
(d) between 0 wt % to 0.5 wt % of sulfur;
(e) between 0 wt % and 25 wt % divalent metal oxides;
(f) between 0 wt % and 10 wt % of tetravalent metal oxides other than SiO₂ ;
(g) between 0 wt % and 20 wt % of trivalent metal oxides;
(h) between 0 wt % and 10 wt % of oxides of pentavalent atoms; and
(i) between 0 wt % and 5 wt % fluorine.

| | **D10 (µm)** | **D50 (µm)** | **D90 (µm)** | **DLS surface area (m²/g)** | **Total Carbon (wt.%)** | **% Water Demand** | **SAI 7-day, %** | **SAI 28-day, %** |
|---|---|---|---|---|---|---|---|---|
| **Glassy precursor** | 1.651 | 10.93 | 52.18 | 0.493 | 0.078 | 99.6 | 83.8 | 83.8 |
| **Carbonated material** | 0.835 | 2.880 | 16.56 | 1.106 | 1.6 | 95.9 | 94.9 | 100.8 |

### Example 3

Mechanochemically carbonated glassy solids were produced by inserting 5.0 kg of glass precursor (ground glassy pozzolan) into a pressure cell with 200 kg of milling media (ceramic ball bearings of 10 mm size). The cell is pressurized with flue gas (CO₂: 8-10 vol%; H₂O: 18-20 vol %; O₂: 2-3 vol %; N₂: 67-72 vol %) to an initial pressure of 414 kPa, and rotated on rollers at 38 RPM for 3 days to obtain mechanochemically carbonated glass. The reaction was initiated at room temperature and no heating or cooling was applied. The ceramic bearings have an Al₂O₃ content of 92 wt.% such that they also served as catalyst. The performance of the glassy precursor and the obtained mechanochemically carbonated glass is shown in the below table.

| | **% Water demand** | **SAI 7-day, %** | **SAI 28-day, %** |
|---|---|---|---|
| **Glassy precursor** | 96.1 | 87.2 | 96.9 |
| **Carbonated material** | 91.5 | 128.0 | 139.2 |

As can be observed from the Strength Activity Index (SAI) measurements and the water demand measurements, the mechanochemically carbonated glassy solid of the present invention provides an unexpectedly reduced water demand and increased strength compared to the uncarbonated counterpart and even compared to the Portland cement control.

## Claims

1. A carbonated glassy solid which is obtainable by carbonation of a solid glassy precursor, said glassy precursor having a SiO₂ content of at least 65 wt.% (by total weight of the glassy precursor).

2. The carbonated glassy solid of claim 1 which has one, two, or three, preferably three, of the following characteristics:
• a D10 within the range of 0.005-5 µm, preferably 0.01-2 µm, most preferably 0.1-1.5 µm;
• a D50 within the range of 0.1-50 µm, preferably 0.5-25 µm, most preferably 1-10 µm;
• a D90 within the range of 0.5-100 µm, preferably 1-50 µm, most preferably 5-25 µm.

3. The carbonated glassy solid of any one of the previous claims which has one, two, or three, preferably three, of the following:
• a total carbon content of at least 0.1 wt.%, preferably at least 0.15 wt.%, more preferably at least 0.2 wt.%;
• a specific surface area of more than 0.3 m²/g, preferably more than 0.5 m²/g, more preferably more than 0.8 m²/g;
• a strength activity index, SAI, at day 28 determined according to ASTM C311/C311M-22 which is at least 80%, preferably at least 100%.

4. The carbonated glassy solid of any one of the previous claims wherein said glassy precursor has:
• a SiO₂ content of at least 70 wt.% (by total weight of the glassy precursor); and/or
• a total amount of alkaline earth metal oxides and hydroxides of less than 20 wt.% (by total weight of the glassy precursor), preferably less than 15 wt.% (by total weight of the glassy precursor).

5. The carbonated glassy solid of any one of the previous claims wherein said glassy precursor comprises recycled glass, preferably recycled soda-lime glass, more preferably recycled soda-lime container glass or flat glass, most preferably recycled soda-lime container glass.

6. A method for producing a mechanochemically carbonated glassy solid, said method comprising the following steps:
a) providing a solid feedstock comprising or consisting of a solid glassy precursor;
b) providing a gas comprising CO₂;
c) introducing said solid feedstock and said gas into a mechanical agitation unit; and
d) subjecting the material of said solid feedstock to a mechanical agitation operation in the presence of said gas in said mechanical agitation unit to obtain the mechanochemically carbonated glassy solid.

7. The method of claim 6 wherein the glassy precursor is selected from soda-lime glass, lead glass, borosilicate glass, aluminosilicate glass, fused silica glass, quartz glass, preferably soda-lime glass, preferably wherein the glassy precursor is selected from recycled soda-lime glass, lead glass, borosilicate glass, aluminosilicate glass, fused silica glass, quartz glass, preferably soda-lime glass.

8. The method of any one of claims 6 or 7 wherein the gas provided in step (b) is a combustion flue gas, preferably combustion flue gas from fossil fuel combustion, wood pellet combustion, biomass combustion or municipal waste combustion.

9. The method of any one of claims 6-8 wherein step (d) is performed:
• at a pressure of more than 300 kPa, preferably more than 600 kPa; and
• at a temperature of less than 150°C, preferably less than 100°C.

10. The method of any one of claims 6-9 wherein carbonation, size reduction and/or surface area increase are effected during step (d) such that the method has one, two or all three, preferably all three, of the following characteristics:
• the ratio of the total carbon content of the mechanochemically carbonated glassy solid obtained in step (d) to the total carbon content of the solid glassy precursor of step (a) is at least 1.5:1, preferably at least 2:1, more preferably at least 3:1;
• the ratio of the D50 of the mechanochemically carbonated glassy solid obtained in step (d) to the D50 of the solid glassy precursor of step (a) is less than 1.5:1, preferably less than 0.5:1, more preferably less than 0.1:1;
• the ratio of the specific surface area of the glassy solid to the specific of the solid glassy precursor is at least 3:1, preferably at least 6:1, more preferably at least 10:1.

11. The method of any one of claims 6-10 wherein said glassy precursor has a SiO₂ content of at least 65 wt.% (by total weight of the glassy precursor), preferably at least 70 wt. % (by total weight of the glassy precursor).

12. A mechanochemically carbonated glassy solid obtainable by the method of any one of claims 6-11.

13. A composition comprising a glassy solid of any one of claims 1-5 or 12 and a further material selected from the group consisting of asphalt, cement, geopolymers, polymers, and combinations thereof, preferably cement, more preferably Portland cement.

14. A method for preparing concrete, said method comprising the following steps:
(i) providing a carbonated glassy solid of any one of claims 1-5 or 12 and a further material which is selected from the group consisting of asphalt, cement, geopolymers, and combinations thereof, optionally in the form of the composition of claim 13 wherein the further material is selected from the group consisting of asphalt, cement, geopolymers, and combinations thereof;
(ii) providing a construction aggregate; and
(iii) contacting, preferably mixing the carbonated glassy solid and the further material of step (i) with the construction aggregate of step (ii).

15. Use of the carbonated glassy solid of any one of claims 1-5 or 12:
• as a filler, preferably as a filler in a material selected from the group consisting of asphalt, geopolymers, cement, mortar, polymers and combinations thereof;
• as a partial replacement for asphalt, geopolymer or cement in concrete or mortar;
• to increase the compressive strength of concrete or mortar;
• to improve the durability of concrete or mortar;
• to improve the durability of concrete or mortar by reducing chloride permeability and/or porosity;
• to improve the strength activity index of concrete or mortar; and/or
• to reduce the water demand of concrete or mortar,
preferably,
• to concomitantly improve the strength activity index of concrete and reduce the water demand of concrete; or
• to concomitantly improve the strength activity index of mortar and reduce the water demand of mortar.
